# EUROPEAN PATENT SPECIFICATION

(11) **EP 3 871 988 B1**
(45) Date of publication and mention of the grant of the patent: **12.10.2022**
(21) Application number: 20886177.3
(22) Date of filing: 04.03.2020
(51) Int. Cl.: B65B 35/20, B65B 35/40, B65B 43/42, B65G 17/06

(54) **PUSHING DEVICE OF BLISTER BOXING MACHINE**
SCHUBVORRICHTUNG EINER BLISTERVERPACKUNGSMASCHINE
DISPOSITIF DE POUSSÉE D'UNE MACHINE DE MISE EN BOÎTE SOUS EMBALLAGE-COQUE

(30) Priority: 26.12.2019 CN 201911370200
(43) Date of publication of application: 01.09.2021
(73) Proprietor: ZHEJIANG HOPING MACHINERY CO., LTD., Technology Industrial Zone Wenzhou Zhejiang 325200 (CN)
(72) Inventor: LI, Wenlei, Wenzhou Zhejiang 325200 (CN); CHEN, Ke, Wenzhou Zhejiang 325200 (CN); YANG, Yifu, Wenzhou Zhejiang 325200 (CN)
(74) Representative: Petculescu, Ana-Maria
(86) International application number: PCT/CN2020/077726
(87) International publication number: WO 2021/128586

(56) References cited:
- EP-A1- 2 682 343
- CN-A- 103 935 553
- CN-A- 111 114 893
- CN-U- 205 418 217
- DE-U1-202005 013 005
- US-A1- 2016 009 430

## Description

### TECHNICAL FIELD

The present invention relates to the field of medicine packaging machinery, and more particularly, to a material pushing apparatus of a blister boxing machine.

### BACKGROUND

The blister boxing machine is a kind of device that loads blister plates (such as capsule medicine plates) and paper instructions into medicine boxes. For example, in 2015, the applicant applied for an invention patent named as *MEDICINE PLATE PUSHING ROD MECHANISM OF BLISTER BOXING MACHINE* (publication patent number CN205098540).

A material pushing apparatus of a blister boxing machine generally includes a chain, a chain wheel, an annular push plate guide rail and a plurality of material pushing units. The material pushing unit includes a material pushing base, a push plate assembly and a push paper assembly. The material pushing unit is connected on the chain through the material pushing base. The chain wheel is driven by a main power source to drive the chain to rotate. The material pushing unit is driven by the chain wheel to move along an annular track. The push plate assembly pushes a medicine plate into a medicine box under a guidance of the annular push plate guide rail, and the push paper assembly pushes a paper instruction into the medicine box under a guidance of an annular push paper guide rail.

However, with respect to the prior material pushing apparatus of the blister boxing machine, the chain not only bears the weight of the whole material pushing unit, but also is configured to pull the whole material pushing unit to move. As a result, the whole system is noisy and the service life of the chain is short.

### SUMMARY

In view of the shortcomings of the prior art, the present invention provides a material pushing apparatus of a blister boxing machine, which can prolong the service life of the chain and reduce the noise of the system.

A material pushing apparatus of a blister boxing machine includes a chain, a chain wheel, an annular push plate guide rail, and a plurality of material pushing units. The material pushing unit includes a material pushing base, a push plate assembly, and a push paper assembly. The material pushing base is connected to the chain, and the chain is wound on the chain wheel. An annular guide rail is arranged at each of both sides of the annular push plate guide rail. A movable sliding base is arranged at each of both ends of the material pushing base, and the movable sliding base is arranged on the annular guide rail with a sliding fit. The annular guide rail is in a form of groove, the movable sliding base is a roller and the movable sliding base rolls in the groove, or the annular guide rail is in a shape of a bar, the movable sliding base comprises an upper roller and a lower roller, and the lower roller and the upper roller are engaged with an inner side and an outer side of the annular guide rail, respectively, and the movable sliding base at one end of the material pushing base further comprises a left roller and a right roller, and the left roller and the right roller are engaged with a left side and a right side of the annular guide rail, respectively.

Preferably, when the annular guide rail is in a shape of a bar, two annular guide rails are arranged side by side at left and right, and surfaces of turning transition sections of the two annular guide rails have a height difference. There are two upper rollers, and the two upper rollers are arranged back and forth. The two upper rollers, on left and right sides, correspondingly act on the two annular guide rails, respectively.

Preferably, the material pushing base is connected to the chain through an adaptive member. One end of the adaptive member is hinged with a shaft pin of the chain, and the other end of the adaptive member is hinged with the material pushing base.

Preferably, a guide groove frame is arranged on a periphery of the annular push plate guide rail, and an annular push paper guide groove and an annular lifting guide groove are arranged on the guide groove frame. The guide groove frame is formed by splicing an upper guide groove frame and a lower guide groove frame, and the upper guide groove frame is lifted and adjustably mounted on the lower guide groove frame. An annular push paper guide groove upper segment and an annular lifting guide groove upper segment are arranged on the upper guide groove frame, and an annular push paper guide groove lower segment and an annular lifting guide groove lower segment are arranged on the lower guide groove frame. The annular push paper guide groove upper segment and the annular push paper guide groove lower segment are engaged by extending, and the annular lifting guide groove upper segment and the annular lifting guide groove lower segment are engaged by extending. A lifting guide rail is mounted on the material pushing base, and a positioning slide block is slidably arranged on the lifting guide rail. A lifting roller and a positioning guide groove are mounted on the positioning slide block, and the lifting roller is arranged in the annular lifting guide groove. The push paper assembly includes a push paper guide rod, a push paper plate and a push paper roller, wherein the push paper plate and the push paper roller are connected on the push paper guide rod. The push paper guide rod is arranged in the positioning guide groove, and the push paper roller is arranged in the annular push paper guide groove.

Preferably, an end portion of the annular push paper guide groove upper segment is provided with a vertical guide groove extending portion, an end portion of the annular push paper guide groove lower segment is provided with a vertical engaging adjustment groove, and the guide groove extending portion is lifted and arranged in the engaging adjustment groove.

Preferably, an end portion of the annular lifting guide groove upper segment is provided with a vertical upper guide groove side wall, an end portion of the annular lifting guide groove lower segment is provided with a vertical lower guide groove side wall, and the lower guide groove side wall is, from left to right, fully engaged with the upper guide groove side wall.

Preferably, a lifting slide block base is mounted on the lower guide groove frame, and a linear guide rail is mounted on the upper guide groove frame. The lifting slide block base is slidably arranged on the linear guide rail. An adjusting screw is mounted on the lower guide groove frame, and the adjusting screw is threaded with the upper guide groove frame.

Preferably, the push plate assembly includes a push plate head, a push plate roller and a push plate slide block. The push plate roller is located in the annular push plate guide rail. A positioning guide rail is arranged on the material pushing base, and the push plate slide block is slidably arranged on the positioning guide rail.

Preferably, a push plate protecting guide groove is arranged on a side of the annular push plate guide rail, and both ends of the push plate protecting guide groove are engaged on the annular push plate guide rail. A push plate rail change assembly is arranged at an upper engagement of the push plate protecting guide groove and the annular push plate guide rail. The push plate rail change assembly includes a push plate rail change fork and a push plate rail change power source configured to drive the push plate rail change fork to rotate.

Preferably, a push paper protecting guide groove is arranged on a side of the annular push paper guide groove, and both ends of the push paper protecting guide groove are engaged on the annular push paper guide groove. A push paper rail change assembly is arranged at an upper engagement of the push paper protecting guide groove and the annular push paper guide groove. The push paper rail change assembly includes a push paper rail change fork and a push paper rail change power source configured to drive the push paper rail change fork to rotate.

According to the material pushing apparatus of the blister boxing machine provided by the present invention, annular guide rails are arranged on both sides of the annular push plate guide rail, so that the movable sliding bases at both ends of the material pushing base are arranged on the annular guide rails with a sliding fit. Therefore, the annular guide rail bears the weight of the whole material pushing unit, while the chain is configured to only pull the whole material pushing unit to move, thereby greatly reducing the noise of the whole system and prolonging the service life of the chain.

### BRIEF DESCRIPTION OF THE DRAWINGS

FIG. 1 is a perspective view of a whole machine of the present invention;
FIG. 2 is a front view of the whole machine of the present invention;
FIG. 3 is a first internal structure view of the present invention (guide groove frame is hidden);
FIG. 4 is a second internal structure view of the present invention (groove guide frame, push plate assembly and push paper assembly are hidden);
FIG. 5 is a third internal structure view of the present invention (groove guide frame, push plate assembly and push paper assembly are hidden);
FIG. 6 is a connection view of a chain and an adaptive member;
FIG. 7 is a fourth internal structure view of the present invention (guide groove frame and material pushing unit are hidden);
FIG. 8 is a partial structural diagram of an annular guide rail of the present invention;
FIG. 9 is a structural diagram of a material pushing base and the push plate assembly;
FIG. 10 is a structural diagram of the push paper assembly and a positioning guide groove;
FIG. 11 is an exploded view of a guide groove frame;
FIG. 12 is an engagement structure view of an annular lifting guide groove upper segment and an annular lifting guide groove lower segment;
FIG. 13 is a walking route map of a push plate roller;
FIG. 14 is a structural diagram of a push paper rail change assembly; and
FIG. 15 is a walking route map of a push paper roller.

### DETAILED DESCRIPTION OF THE EMBODIMENTS

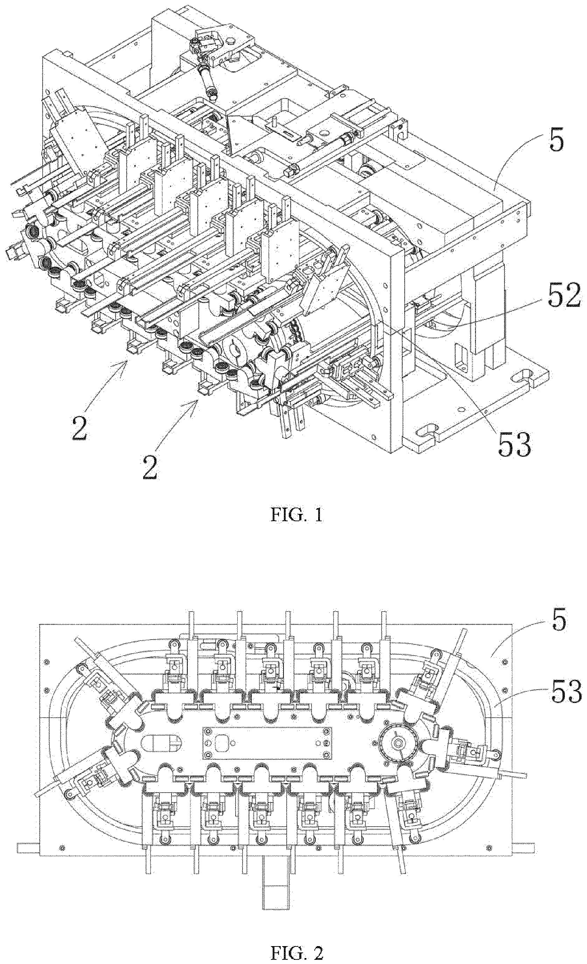

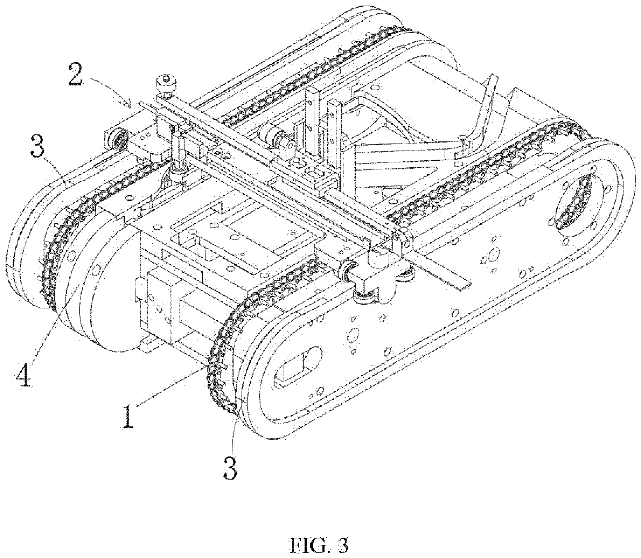

As shown in FIGS. 1-5, a material pushing apparatus of a blister boxing machine includes the chain 1, the chain wheel (not shown), the annular push plate guide rail 4, the annular push paper guide rail and a plurality of material pushing units 2. Each material pushing unit 2 includes the material pushing base 20, the push plate assembly 21, and the push paper assembly 22. The push plate assembly 21 and the push paper assembly 22 are both mounted on the material pushing base 20. The material pushing base 20 is connected to the chain 1, and the chain 1 is wound on the chain wheel. The chain wheel is driven by a main power source to drive the chain 1 to rotate, and the chain 1 drives the material pushing unit 2 to perform an annular motion. In order to reduce the bearing load of the chain 1, in the present invention, the annular guide rail 3 is arranged on each of both sides of the annular push plate guide rail 4, and the movable sliding base 23 is arranged at each of both ends of the material pushing base 20. The movable sliding base 23 is arranged on the annular guide rail 3 with a sliding fit, where "sliding fit" means that the movable sliding base 23 is capable of performing the annular motion on the annular guide rail 3. By means of such structure, the weight of the whole material pushing unit 2 acts on the annular guide rail 3, in other words, the annular guide rail 3 bears the weight of the whole material pushing unit 2, while the chain 1 only needs to pull the whole material pushing unit 2 to perform the annular motion, so that the noise of the whole system is significantly reduced, and the service life of the chain 1 is greatly prolonged.

There are two forms of the annular guide rail 3, and correspondingly, there are two structures of the movable sliding base 23, and two embodiments are given in detail below.

First embodiment: the annular guide rail 3 can be in a form of groove. In this case, the movable sliding base 23 may be one roller, so that one roller rolls in an annular groove. The groove is preferably located on a side, so that the roller enters the groove from the side. This structure also enables the movable sliding base 23 to be arranged on the annular guide rail 3 with a sliding fit, which achieves the same technical effect.

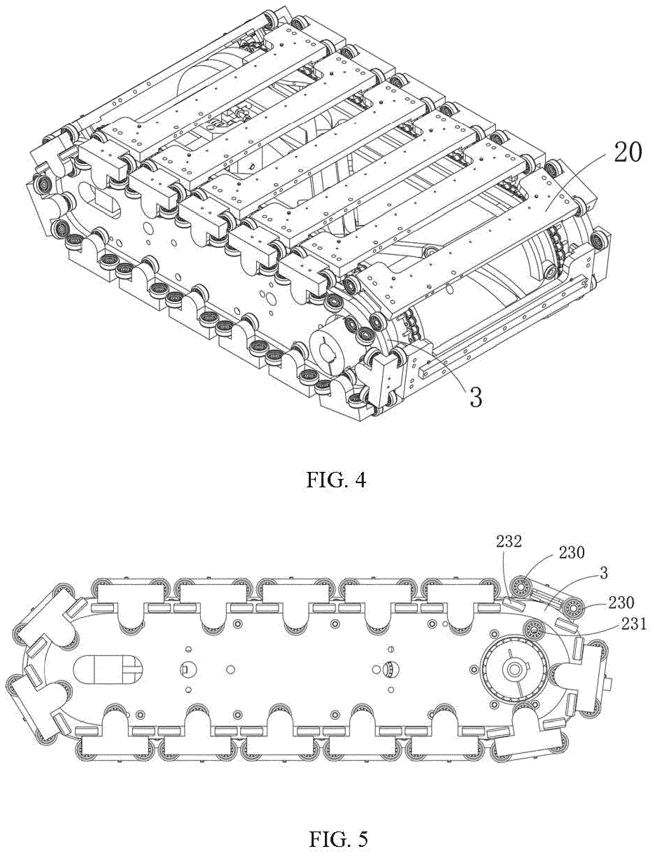

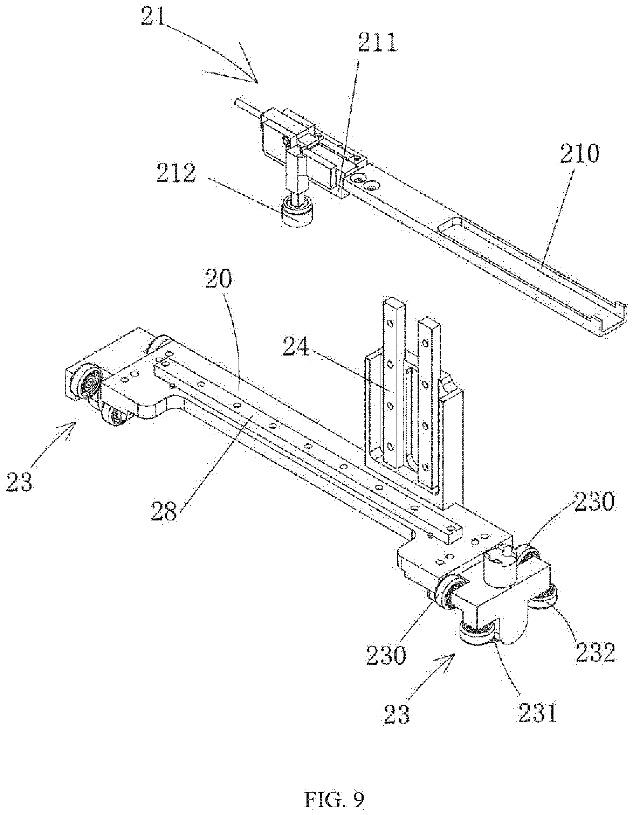

Second embodiment: the annular guide rail 3 is in a shape of a bar. In this case, the movable sliding base 23 includes the upper roller 230 and the lower roller 231. As shown in FIGS. 5 and 9, the lower roller 231 and the upper roller 230 are engaged with the inner side and the outer side of the annular guide rail 3, respectively, that is, the lower roller 231 acts on an inner ring of the annular guide rail 3, while the upper roller 230 acts on an outer ring of the annular guide rail 3, so that the movable sliding base 23 does not move towards the inside and outside. The movable sliding base 23 at one end further includes the left roller and the right roller 232. The left roller and the right roller 232 are engaged with the left side and the right side of the annular guide rail 3, respectively, that is, the left roller acts on the left side of the annular guide rail 3, while the right roller 232 acts on the right side of the annular guide rail 3, so that the movable sliding base 23 does not move towards the left and right. This structure also enables the movable sliding base 23 to be arranged on the annular guide rail 3 with a sliding fit, which achieves the same technical effect.

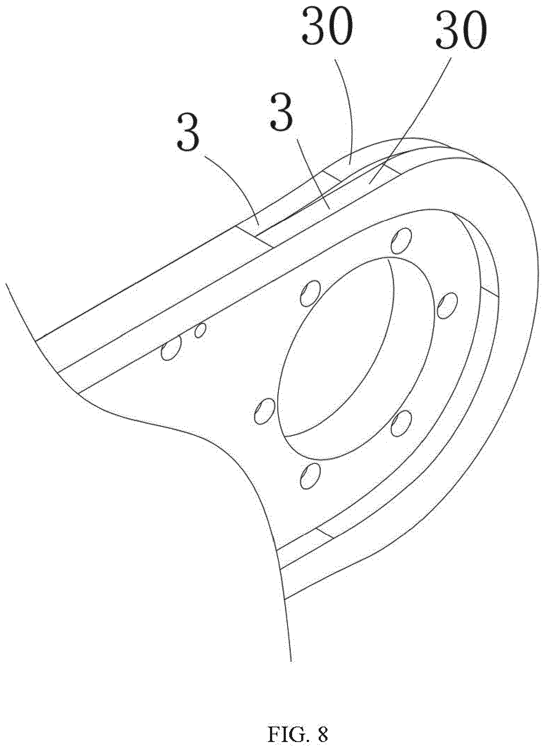

On the basis of the second form of the annular guide rail 3, in order to improve the stability of the engagement of the movable sliding base 23 and the annular guide rail 3, as shown in FIG. 8, the annular guide rail 3 of the present invention includes two annular guide rails 3 arranged side by side. As shown in FIG. 9, the movable sliding base 23 includes two upper rollers 230 arranged back and forth. As shown in FIG. 5, the two upper rollers 230, on left and right sides, correspondingly act on the two annular guide rails 3, and the two upper rollers 230 and one lower roller 231 form a triangle when viewed from the side. This structure of the movable sliding base 23 has the following advantages: I. the arrangement of two upper rollers 230 can increase a contact area of the movable sliding base 23 and the annular guide rail 3, so that the force borne by each upper roller 230 can be shared, thereby reducing a friction force between each upper roller 230 and the annular guide rail 3, and finally reducing the noise of the system and prolonging the service life of the movable sliding base 23; and II. the two upper rollers 230 arranged back and forth enable the movable sliding base 23 to be engaged with the annular guide rails 3 in a triangular form, and the three points form a plane, so that the movable sliding base 23 can turn more smoothly in an arc section of the annular guide rails 3. Based on the above structure, according to the principle of conjugate cam, in order to enable the movable sliding base 23 to turn smoothly (i.e., the two upper rollers 230 and the one lower roller 231 are always attached to the annular guide rails 3 in the turning section), surfaces of the turning transition sections 30 of the two annular guide rails 3 have a height difference. By means of this structure, the movable sliding base 23 is always engaged with the annular guide rails 3 in the turning section, so that a movement track of the central point of the movable sliding base 23 in the turning section infinitely approaches a semicircle, thus a movement track of the material pushing unit 2 infinitely approaches a runway shape to finally ensure the stable operation of the material pushing unit 2.

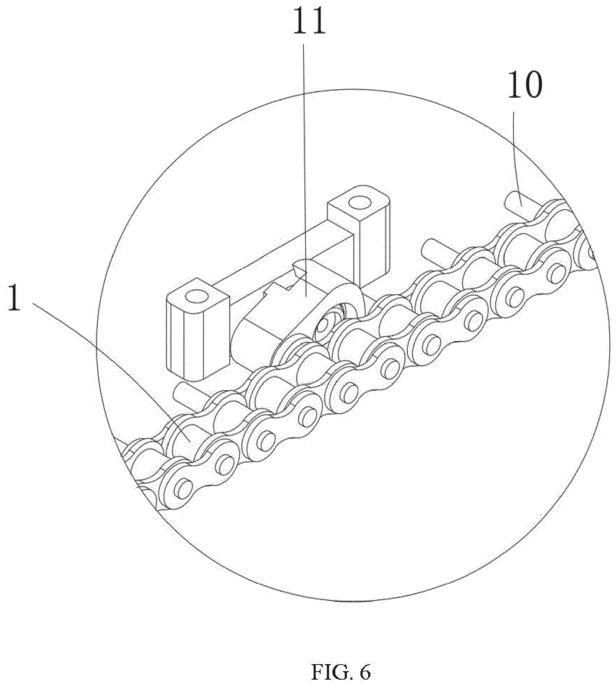

As mentioned above, the chain 1 pulls the material pushing unit 2 to move. However, the chain 1 will be gradually stretched as time accumulates, and with the stretching of the chain 1, the chain 1 will not normally push the material pushing unit 2 to operate. In order to solve this problem, as shown in FIG. 6, the material pushing base 20 is connected to the chain 1 through the adaptive member 11. One end of the adaptive member 11 is hinged with the shaft pin 10 of the chain 1, and the other end of the adaptive member 11 is hinged with the material pushing base 20 (including direct hinging or indirect hinging, as shown in FIG. 6, the other end of the adaptive member 11 is hinged with a connecting base, and the connecting base is connected to the material pushing base 20). The advantage of this structure is as follows: even if the chain 1 is stretched to a certain extent, since the material pushing base 20 is limited to the annular guide rail 3, the adaptive member 11 can be pulled by the material pushing base 20, and the adaptive member 11 in turn pulls the chain 1. This ensures that the chain 1 can normally push the material pushing unit 2 to operate, and finally ensures that the push plate roller 44 will not be separated from the annular push plate guide rail 4 when turning.

At present, when the material pushing apparatus of the mainstream blister boxing machine on the market changes specifications (the heights of blister plates with different specifications will be different), the height of the push paper plate used for pushing the paper instructions also changes accordingly, but the prior structure can only support adjusting or replacing a single push paper assembly 22 one by one, which is time-consuming and laborious, and the adjusted heights are difficult to be unified, thereby affecting the pushing of the material into the box.

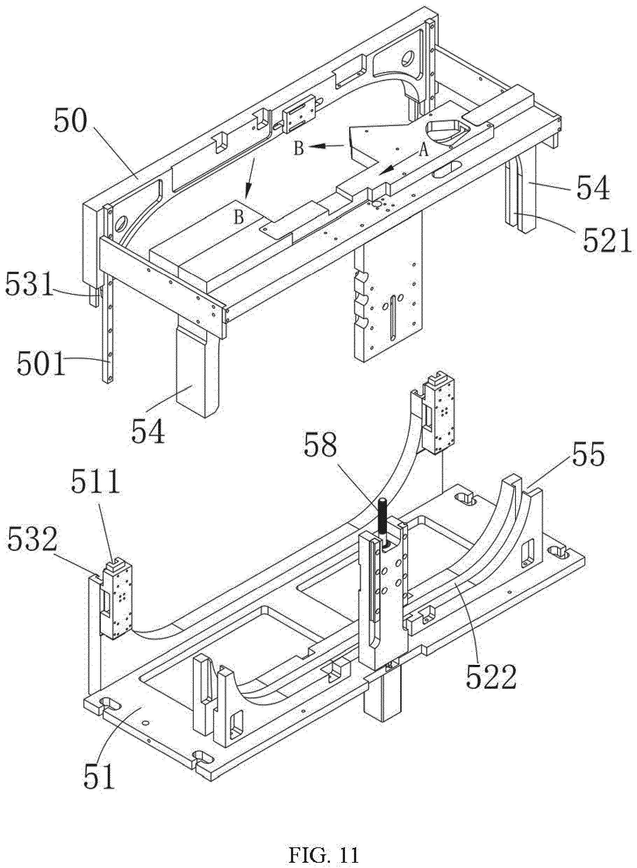

In order to solve this problem, according to the present invention, the guide groove frame 5 is arranged on a periphery of the annular push plate guide rail 4. As shown in FIGS. 1 and 2, the annular push paper guide groove 52 and the annular lifting guide groove 53 are arranged on the guide groove frame 5. As shown in FIG. 11, the guide groove frame 5 is formed by splicing the upper guide groove frame 50 and the lower guide groove frame 51, and the upper guide groove frame 50 is lifted and adjustably mounted on the lower guide groove frame 51. The annular push paper guide groove upper segment 521 and the annular lifting guide groove upper segment 531 are arranged on the upper guide groove frame 50, while the annular push paper guide groove lower segment 522 and the annular lifting guide groove lower segment 532 are arranged on the lower guide groove frame 51. The annular push paper guide groove upper segment 521 and the annular push paper guide groove lower segment 522 can be engaged by extending, and the annular lifting guide groove upper segment 531 and the annular lifting guide groove lower segment 532 can be engaged by extending. In other words, when the upper guide groove frame 50 is lifted and adjusted, a distance between the annular push paper guide groove upper segment 521 and the annular push paper guide groove lower segment 522 changes, but the two still form a closed loop, and the same principle applies to both the annular lifting guide groove upper segment 531 and the annular lifting guide groove lower segment 532.

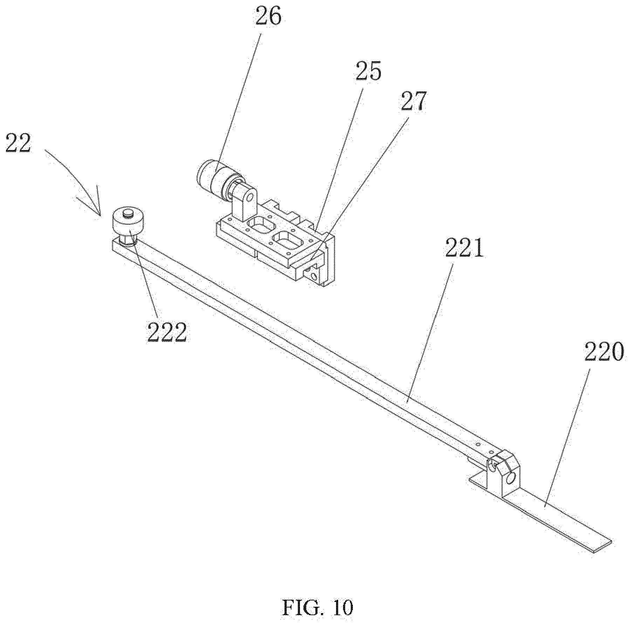

As the above structure of the guide groove frame 5 is adopted, in order to enable the push paper assembly 22 to be adapted to such a guide groove frame 5, the structure of the material pushing unit 2 is improved accordingly, and the specific improvement is as follows. As shown in FIG. 9, the lifting guide rail 24 is mounted on the material pushing base 20. As shown in FIG. 10, the positioning slide block 25 is slidably arranged on the lifting guide rail 24, and the lifting roller 26 and the positioning guide groove 27 are arranged on the positioning slide block 25. The lifting roller 26 is arranged in the annular lifting guide groove 53. The push paper assembly 22 includes the push paper plate 220 and the push paper guide rod 221. One end of the push paper guide rod 221 is connected to the push paper plate 220, and the other end of the push paper guide rod 221 is connected to the push paper roller 222. The push paper guide rod 221 is arranged in the positioning guide groove 27, and the positioning guide groove 27 is configured to guide the push paper guide rod 221. The push paper roller 222 is arranged in the annular push paper guide groove 52.

The principle of adjusting the height of the push paper plate 220 is as follows. When the height of the medicine plate increases, the height of the push paper plate 220 increases correspondingly. During adjustment, the upper guide groove frame 50 rises, and at this time, the annular push paper guide groove upper segment 521 and the annular lifting guide groove upper segment 531 rise simultaneously. Since the lifting roller 26 is in the annular lifting guide groove 53, the positioning slide block 25 moves and rises on the lifting guide rail 24, and the positioning guide groove 27 also rises simultaneously. Since the push paper roller 222 is arranged in the annular push paper guide groove 52, the push paper guide rod 221 and the push paper plate 220 also rise simultaneously. In this way, the push paper guide rod 221 is still in the positioning guide groove 27, and the height of the push paper plate 220 can adapt to the height of the medicine plate after being increased through adjusting. Therefore, it is very simple to adjust the height of the push paper plate 220, as long as the height of the upper guide groove frame 50 is adjusted, thereby reducing the difficulty of adjusting the equipment after changing the specifications of the medicine plates, and improving the production efficiency.

The extending engagement between the annular push paper guide groove upper segment 521 and the annular push paper guide groove lower segment 522 can adopt a variety of structures, for example, a stretchable extension guide groove can be adopted, and the upper and lower segments are engaged through the extension groove. The present invention provides a more convenient engagement manner: as shown in FIG. 11, an end portion of the annular push paper guide groove upper segment 521 is provided with the vertical guide groove extending portion 54, while an end portion of the annular push paper guide groove lower segment 522 is provided with the vertical engaging adjustment groove 55, and the guide groove extending portion 54 is lifted and arranged in the engaging adjustment groove 55. When the height of the upper guide groove frame 50 is adjusted, the guide groove extending portion 54 on the upper guide groove frame 50 moves vertically up and down in the engaging adjustment groove 55 on the lower guide groove frame 51, while the annular push paper guide groove 52 is still a closed guide groove.

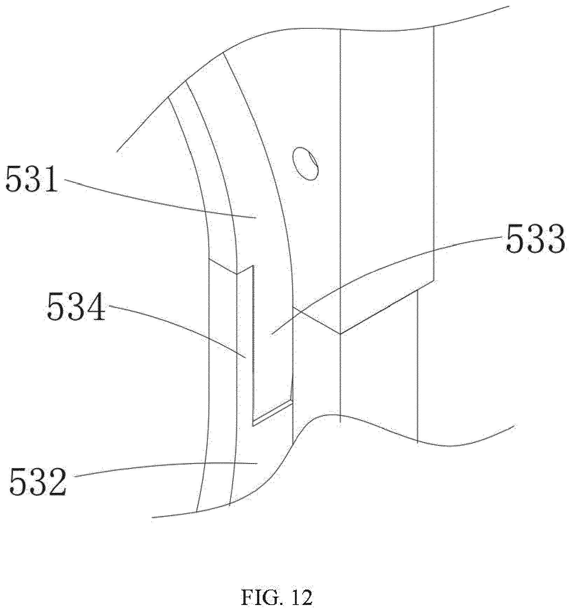

Similarly, the extending engagement of the annular lifting guide groove upper segment 531 and the annular lifting guide groove lower segment 532 can adopt a variety of structures. Since the annular lifting guide groove 53 is slotted along the transverse direction, an extension block can be adopted at a side edge to move up and down, and the upper and lower segments are engaged through the extension block. The present invention provides a more convenient engagement manner: as shown in FIG. 11 and FIG. 12, an end portion of the annular lifting guide groove upper segment 531 is provided with the vertical upper guide groove side wall 533, while an end portion of the annular lifting guide groove lower segment 532 is provided with the vertical lower guide groove side wall 534, and the lower guide groove side wall 534 is, from left to right, fully engaged with the upper guide groove side wall 533. When the height of the upper guide groove frame 50 is adjusted, although the distance from top to bottom varies, the upper guide groove side wall 533 on the upper guide groove frame 50 and the lower guide groove side wall 534 on the lower guide groove frame 51 are attached to each other left and right, and the lifting roller can still be on the upper guide groove side wall 533 or the lower guide groove side wall 534, that is, the annular lifting guide groove 53 is still a closed guide groove.

In order to adjust the position of the upper guide groove frame 50 more smoothly, according to the present invention, the lifting slide block base 511 is mounted on the lower guide groove frame 51, and the linear guide rail 501 is mounted on the upper guide groove frame 50. The lifting slide block base 511 is slidably arranged on the linear guide rail 501. The adjusting screw 58 is further mounted on the lower guide groove frame 51, and the adjusting screw 58 is threaded with the upper guide groove frame 50. When it is necessary to adjust the position of the upper guide groove frame 50, the upper guide groove frame 50 moves up and down through the linear guide rail 501 by rotating the adjusting screw 58 (either manually or by a motor), thereby realizing smooth adjustment.

Certainly, the push plate assembly 21 includes the push plate head 210, the push plate roller 212, and the push plate slide block 211. As shown in FIG. 9, the push plate roller 212 and the push plate head 210 are both connected on the push plate slide block 211. The push plate roller 212 is located in the annular push plate guide rail 4. The positioning guide rail 28 is arranged on the material pushing base 20, and the push plate slide block 211 is slidably arranged on the positioning guide rail 28. With the annular motion of the material pushing base 20, the push plate roller 212 moves on the annular push plate guide rail 4, and the push plate slide block 211 moves on the positioning guide rail 28 under a guidance of the annular push plate guide rail 4, so that the push plate head 210 performs an action of pushing the medicine plate.

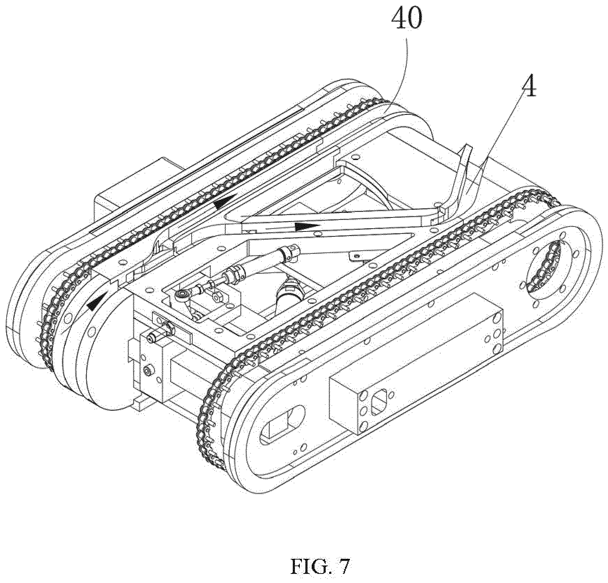

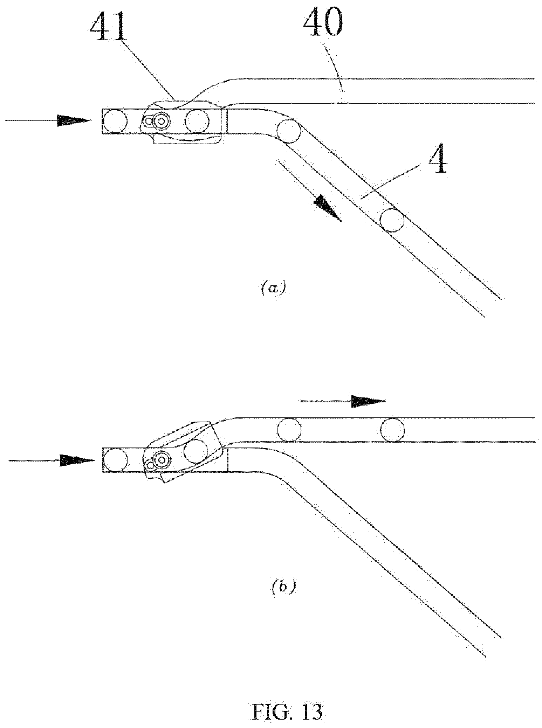

As shown in FIGS. 7 and 13, generally, the push plate roller moves along a path of the annular push plate guide rail 4. When the push plate roller 212 moves along the path, the push plate head 210 can normally push out the medicine plate. Sometimes, however, there is a problem with the placement of the medicine plate, resulting in the absence of the medicine plate in one of the medicine plate conveying grids. In this case, the push plate head 210 does not need to perform the action of pushing. Certainly, the push plate head 210 can also perform the action of pushing, however, since the process of pushing by the push plate head 210 is the process of the push plate roller 212 walking along a ramp, the service life of the roller will be affected. To solve this problem, the push plate protecting guide groove 40 is arranged on a side of the annular push plate guide rail 4, and both ends of the push plate protecting guide groove 40 are engaged on the annular push plate guide rail 4. A push plate rail change assembly is arranged at an upper engagement of the push plate protecting guide groove 40 and the annular push plate guide rail 4. The push plate rail change assembly includes the push plate rail change fork 41 and a push plate rail change power source configured to drive the push plate rail change fork 41 to rotate. When the system detects that there is no medicine plate in a grid, the push plate rail change power source controls the push plate rail change fork 41 to rotate, so that the corresponding push plate roller 210 will no longer enter the annular push plate guide rail 4, but enter the push plate protecting guide groove 40. Since the push plate protecting guide groove 40 has no ramp, it will not affect the push plate roller 210, thereby prolonging the service life of the roller and other parts.

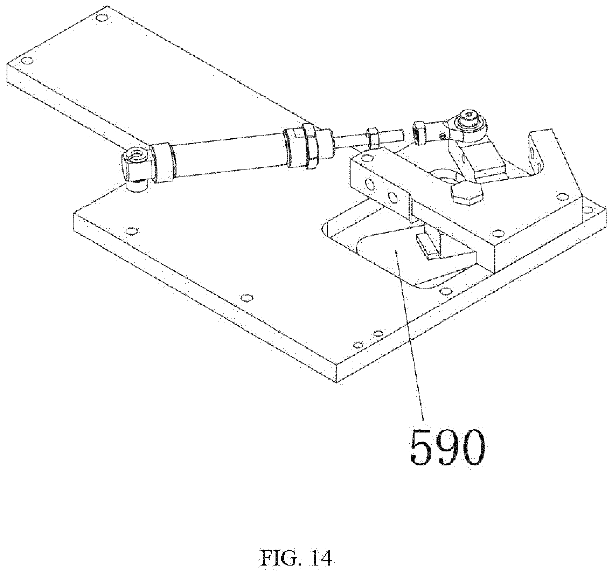

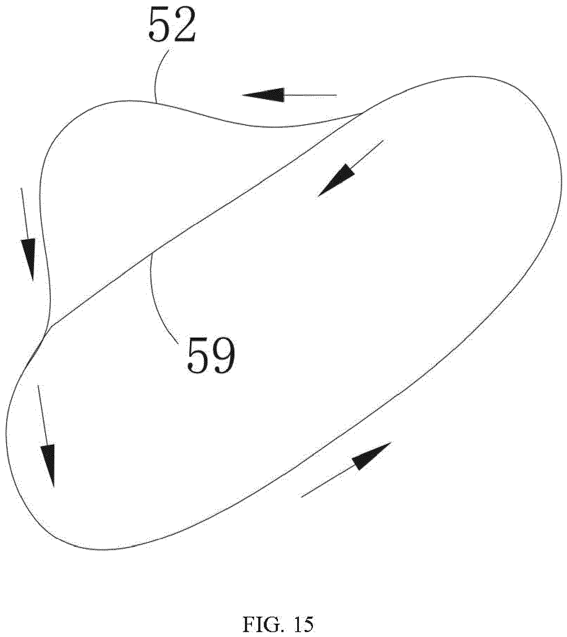

Similarly, in order to prolong the service life of the push paper roller, as shown in FIG. 15, the push paper protecting guide groove 59 is arranged on a side of the annular push paper guide groove 52, and both ends of the push paper protecting guide groove 59 are engaged on the annular push paper guide groove 52. A push paper rail change assembly is arranged at an upper engagement of the push paper protecting guide groove 59 and the annular push paper guide groove 52. As shown in FIG. 14, the push paper rail change assembly includes the push paper rail change fork 590 and a push paper rail change power source configured to drive the push paper rail change fork 590 to rotate. The principle is the same as that of the rail change of the above push plate roller, which will not be repeated here.

According to the material pushing apparatus of the blister boxing machine provided by the present invention, the annular guide rails 3 are arranged on both sides of the annular push plate guide rail 4 to enable the movable sliding bases 23 at both ends of the material pushing base 20 to be arranged on the annular guide rails 3 with a sliding fit. In this way, the annular guide rails 3 bear the weight of the whole material pushing unit 2, while the chain 1 is configured to only pull the whole material pushing unit 2 to move, thereby greatly reducing the noise of the whole system and prolonging the service life of the chain.

## Claims

1. A material pushing apparatus of a blister boxing machine, comprising a chain (1), a chain wheel, an annular push plate guide rail (4), and a plurality of material pushing units (2); the material pushing unit (2) comprises a material pushing base (20), a push plate assembly (21), and a push paper assembly (22); the material pushing base (20) is connected to the chain (1), and the chain (1) is wound on the chain wheel;
**characterized in that** an annular guide rail (3) is arranged at each of both sides of the annular push plate guide rail (4); a movable sliding base (23) is arranged at each of both ends of the material pushing base (20), and the movable sliding base (23) is arranged on the annular guide rail (3) with a sliding fit, and wherein
the annular guide rail (3) is in a form of groove, the movable sliding base (23) is a roller and the movable sliding base (23) rolls in the groove, or
the annular guide rail (3) is in a shape of a bar; the movable sliding base (23) comprises an upper roller (230) and a lower roller (231), and the lower roller (231) and the upper roller (230) are engaged with an inner side and an outer side of the annular guide rail (3), respectively; and the movable sliding base (23) at one end of the material pushing base further comprises a left roller and a right roller (232), and the left roller and the right roller (232) are engaged with a left side and a right side of the annular guide rail (3), respectively.

2. The material pushing apparatus of the blister boxing machine according to claim 1, wherein when the annular guide rail (3) is in a shape of a bar, two annular guide rails (3) are arranged side by side at left and right, and surfaces of turning transition sections (30) of the two annular guide rails (3) have a height difference; there are two upper rollers (230), and the two upper rollers (230) are arranged back and forth; the two upper rollers (230), on left and right sides, correspondingly act on the two annular guide rails (3), respectively.

3. The material pushing apparatus of the blister boxing machine according to claim 1, **characterized in that**, the material pushing base (20) is connected to the chain (1) through an adaptive member (11); one end of the adaptive member (11) is hinged with a shaft pin (10) of the chain (1), and the other end of the adaptive member (11) is hinged with the material pushing base (20).

4. The material pushing apparatus of the blister boxing machine according to claim 1, **characterized in that**, a guide groove frame (5) is arranged on a periphery of the annular push plate guide rail (4), and an annular push paper guide groove (52) and an annular lifting guide groove (53) are arranged on the guide groove frame (5); the guide groove frame (5) is formed by splicing an upper guide groove frame (50) and a lower guide groove frame (51), and the upper guide groove frame (50) is lifted and adjustably mounted on the lower guide groove frame (51); an annular push paper guide groove upper segment (521) and an annular lifting guide groove upper segment (531) are arranged on the upper guide groove frame (50), and an annular push paper guide groove lower segment (522) and an annular lifting guide groove lower segment (532) are arranged on the lower guide groove frame (51); the annular push paper guide groove upper segment (521) and the annular push paper guide groove lower segment (522) are engaged by extending, and the annular lifting guide groove upper segment (531) and the annular lifting guide groove lower segment (532) are engaged by extending; a lifting guide rail (24) is mounted on the material pushing base (20), and a positioning slide block (25) is slidably arranged on the lifting guide rail (24); a lifting roller (26) and a positioning guide groove (27) are mounted on the positioning slide block (25), and the lifting roller (26) is arranged in the annular lifting guide groove (53); the push paper assembly (22) comprises a push paper guide rod (221), a push paper plate (220) and a push paper roller (222), wherein the push paper plate (220) and the push paper roller (222) are connected on the push paper guide rod (221); the push paper guide rod (221) is arranged in the positioning guide groove (27), and the push paper roller (222) is arranged in the annular push paper guide groove (52).

5. The material pushing apparatus of the blister boxing machine according to claim 4, **characterized in that**, an end portion of the annular push paper guide groove upper segment (521) is provided with a vertical guide groove extending portion (54), an end portion of the annular push paper guide groove lower segment (522) is provided with a vertical engaging adjustment groove (55), and the guide groove extending portion (54) is lifted and arranged in the engaging adjustment groove (55).

6. The material pushing apparatus of the blister boxing machine according to claim 4 or 5, **characterized in that**, an end portion of the annular lifting guide groove upper segment (531) is provided with a vertical upper guide groove side wall (533), an end portion of the annular lifting guide groove lower segment (532) is provided with a vertical lower guide groove side wall (534), and the lower guide groove side wall (534) is, from left to right, fully engaged with the upper guide groove side wall (533).

7. The material pushing apparatus of the blister boxing machine according to claim 4, **characterized in that**, a lifting slide block base (511) is mounted on the lower guide groove frame (51), and a linear guide rail (501) is mounted on the upper guide groove frame (50); the lifting slide block base (511) is slidably arranged on the linear guide rail (501); an adjusting screw (58) is mounted on the lower guide groove frame (51), and the adjusting screw (58) is threaded with the upper guide groove frame (50).

8. The material pushing apparatus of the blister boxing machine according to claim 1, **characterized in that**, the push plate assembly (21) comprises a push plate head (210), a push plate roller (212) and a push plate slide block (211); the push plate roller (212) is located in the annular push plate guide rail (4); a positioning guide rail (28) is arranged on the material pushing base (20), and the push plate slide block (211) is slidably arranged on the positioning guide rail (28).

9. The material pushing apparatus of the blister boxing machine according to claim 1, **characterized in that**, a push plate protecting guide groove (40) is arranged on a side of the annular push plate guide rail (4), and both ends of the push plate protecting guide groove (40) are engaged on the annular push plate guide rail (4); a push plate rail change assembly is arranged at an upper engagement of the push plate protecting guide groove (40) and the annular push plate guide rail (4), and the push plate rail change assembly comprises a push plate rail change fork (41) and a push plate rail change power source configured to drive the push plate rail change fork (41) to rotate.

10. The material pushing apparatus of the blister boxing machine according to claim 4, **characterized in that**, a push paper protecting guide groove (59) is arranged on a side of the annular push paper guide groove (52), and both ends of the push paper protecting guide groove (59) are engaged on the annular push paper guide groove (52); a push paper rail change assembly is arranged at an upper engagement of the push paper protecting guide groove (59) and the annular push paper guide groove (52), and the push paper rail change assembly comprises a push paper rail change fork (590) and a push paper rail change power source configured to drive the push paper rail change fork (590) to rotate.

## Patentansprüche

1. Materialschiebeeinrichtung für Blisterverpackungsmaschinen, umfassend eine Kette (1), ein Kettenrad, eine ringförmige Schubplattenführungsschiene (4) und eine Vielzahl von Materialschiebeeinheiten (2); wobei die Materialschiebeeinheit (2) einen Materialschiebekörper (20), eine Schubplattenbaugruppe (21) und eine Papierschiebebaugruppe (22) umfasst; wobei der Materialschiebekörper (20) mit der Kette (1) verbunden ist und die Kette (1) um das Kettenrad gewickelt ist;
**dadurch gekennzeichnet, dass** die ringförmige Führungsschiene (3) auf beiden Seiten der ringförmigen Schubplattenführungsschiene (4) angeordnet ist; ein bewegbarer Gleitkörper (23) an jedem der beiden Enden des Materialschiebekörpers (20) angeordnet ist und der bewegbare Gleitkörper (23) in Gleitpassung an der ringförmigen Führungsschiene (3) angeordnet ist, und wobei
die ringförmige Führungsschiene (3) die Form einer Nut aufweist, der bewegbare Gleitkörper (23) eine Rolle ist und der bewegbare Gleitkörper (23) in der Nut rollt, oder
wobei die ringförmige Führungsschiene (3) die Form einer Leiste aufweist; der bewegbare Gleitkörper (23) eine obere Rolle (230) und eine untere Rolle (231) umfasst und die untere Rolle (231) und die obere Rolle (230) jeweils mit einer Innenseite und einer Außenseite der ringförmigen Führungsschiene (3) in Eingriff stehen; und der bewegbare Gleitkörper (23) an einem Ende des Materialschiebekörpers ferner eine linke Rolle und eine rechte Rolle (232) umfasst und die linke Rolle und die rechte Rolle (232) jeweils mit einer linken Seite und einer rechten Seite der ringförmigen Führungsschiene (3) in Eingriff stehen.

2. Materialschiebeeinrichtung für Blisterverpackungsmaschinen nach Anspruch 1, wobei die ringförmige Führungsschiene (3) die Form einer Stange aufweist, zwei ringförmige Führungsschienen (3) links und rechts Seite an Seite angeordnet sind und Oberflächen von Wendeübergangsabschnitten (30) der zwei ringförmigen Führungsschienen (3) eine Höhendifferenz aufweisen; wobei zwei obere Rollen (230) vorliegen und die beiden oberen Rollen (230) vorne und hinten angeordnet sind; wobei je eine der beiden oberen Rollen (230) auf der linken und rechten Seite auf je eine der zwei ringförmigen Führungsschienen (3) einwirkt.

3. Materialschiebeeinrichtung für Blisterverpackungsmaschinen nach Anspruch 1, **dadurch gekennzeichnet, dass** der Materialschiebekörper (20) durch ein adaptives Element (11) mit der Kette (1) verbunden ist; wobei ein Ende des adaptiven Elements (11) drehbar an einem Zapfen (10) der Kette (1) angebracht ist und das andere Ende des adaptiven Elements (11) drehbar an dem Materialschiebekörper (20) angebracht ist.

4. Materialschiebeeinrichtung für Blisterverpackungsmaschinen nach Anspruch 1, **dadurch gekennzeichnet, dass** ein Führungsnutrahmen (5) an einem Umfang der ringförmigen Schubplattenführungsschiene (4) angeordnet ist und eine ringförmige Papierschiebeführungsnut (52) und eine ringförmige Hebeführungsnut (53) an dem Führungsnutrahmen (5) angeordnet sind; der Führungsnutrahmen (5) durch Aufteilen eines oberen Führungsnutrahmens (50) und eines unteren Führungsnutrahmens (51) gebildet ist und der obere Führungsnutrahmen (50) angehoben und verstellbar am unteren Führungsnutrahmen (51) montiert ist; eine oberes Segment (521) der ringförmigen Schiebepapierführungsnut und ein oberes Segment (531) der ringförmigen Hebeführungsnut am oberen Führungsnutrahmen (50) angeordnet sind und ein unteres Segment (522) der ringförmigen Schiebepapierführungsnut und ein unteres Segment (532) der ringförmigen Hebeführungsnut am unteren Führungsnutrahmen (51) angeordnet sind; das obere Segment (521) der ringförmigen Schiebepapierführungsnut und das untere Segment (522) der ringförmigen Schiebepapierführungsnut durch Erweitern in Eingriff treten und das obere (531) Segment der ringförmigen Hebeführungsnut und das untere Segment (532) der ringförmigen Hebeführungsnut durch Erweitern in Eingriff treten; eine Hebeführungsschiene (24) am Materialschiebekörper (20) montiert ist und ein Positionierungsgleitblock (25) gleitfähig an der Hebeführungsschiene (24) angeordnet ist; eine Heberolle (26) und eine Positionierungsführungsnut (27) an dem Positionierungsgleitblock (25) montiert sind und die Heberolle (26) in der ringförmigen Hebeführungsnut (53) angeordnet ist; die Papierschiebebaugruppe (22) eine Papierschiebeführungsstange (221), eine Papierschubplatte (220) und eine Papierschieberolle (222) umfasst, wobei die Papierschubplatte (220) und die Papierschieberolle (222) an der Papierschiebeführungsstange (221) verbunden sind; die Papierschiebeführungsstange (221) in der Positionierungsführungsnut (27) angeordnet ist und die Papierschieberolle (222) in der ringförmigen Papierschiebeführungsnut (52) angeordnet ist.

5. Materialschiebeeinrichtung für Blisterverpackungsmaschinen nach Anspruch 4, **dadurch gekennzeichnet, dass** ein Endabschnitt des oberen Segments (521) der ringförmigen Schiebepapierführungsnut mit einem vertikalen Führungsnuterstreckungsabschnitt (54) versehen ist, ein Endabschnitt des unteren Segments (522) der ringförmigen Schiebepapierführungsnut mit einer vertikalen Eingriffeinstellungsnut (55) versehen ist und der Führungsnuterstreckungsabschnitt (54) angehoben und in der Eingriffeinstellungsnut (55) angeordnet wird.

6. Materialschiebeeinrichtung für Blisterverpackungsmaschinen nach Anspruch 4 oder 5, **dadurch gekennzeichnet, dass** ein Endabschnitt des oberen Segments (531) der ringförmigen Hebeführungsnut mit einer vertikalen Seitenwand (533) der oberen Führungsnut versehen ist, ein Endabschnitt des unteren Segments (532) der ringförmigen Hebeführungsnut mit einer vertikalen Seitenwand (534) der unteren Führungsnut versehen ist und die vertikalen Seitenwand (534) der unteren Führungsnut von links nach rechts vollständig mit der vertikalen Seitenwand (533) der oberen Führungsnut in Eingriff steht.

7. Materialschiebeeinrichtung für Blisterverpackungsmaschinen nach Anspruch 4, **dadurch gekennzeichnet, dass** ein Hebegleitblockkörper (511) an dem unteren Führungsnutrahmen (51) angebracht ist und eine Linearführungsschiene (501) an dem oberen Führungsnutrahmen (50) angebracht ist; wobei der Hebegleitblockkörper (511) verschiebbar an der Linearführungsschiene (501) angeordnet ist; eine Stellschraube (58) an dem unteren Führungsnutrahmen (51) angebracht ist und die Stellschraube (58) mit dem oberen Führungsnutrahmen (50) verschraubt ist.

8. Materialschiebeeinrichtung für Blisterverpackungsmaschinen nach Anspruch 1, **dadurch gekennzeichnet, dass** die Schiebeplattenbaugruppe (21) einen Schiebeplattenkopf (210), eine Schiebeplattenrolle (212) und einen Schiebeplattengleitblock (211) umfasst; wobei die Schiebeplattenrolle (212) in der ringförmigen Schiebeplattenführungsschiene (4) angeordnet ist; eine Positionierungsführungsschiene (28) an dem Materialschiebekörper (20) angeordnet ist und der Schiebeplattengleitblock (211) an der Positionierungsführungsschiene (28) angeordnet ist.

9. Materialschiebeeinrichtung für Blisterverpackungsmaschinen nach Anspruch 1, **dadurch gekennzeichnet, dass** eine Schiebeplattenschutzführungsnut (40) an einer Seite der ringförmigen Schiebeplattenführungsschiene (4) angeordnet ist und beide Enden der Schiebeplattenschutzführungsnut (40) mit der ringförmigen Schiebeplattenführungsschiene (4) in Eingriff stehen; eine Schiebeplattenschienenwechselbaugruppe an einer oberen Eingriffsstelle der Schiebeplattenschutzführungsnut (40) und der ringförmigen Schiebeplattenführungsschiene (4) angeordnet ist und die Schiebeplattenschienenwechselbaugruppe eine Schiebeplattenschienenwechselgabel (41) und eine Schiebeplattenschienenwechselantriebsquelle umfasst, die dazu konfiguriert ist, die Schiebeplattenschienenwechselgabel (41) drehend anzutreiben.

10. Materialschiebeeinrichtung für Blisterverpackungsmaschinen nach Anspruch 4, **dadurch gekennzeichnet, dass** eine Schiebepapierschutzführungsnut (59) an einer Seite der ringförmigen Schiebepapierführungsnut (52) angeordnet ist und beide Enden der Schiebepapierschutzführungsnut (59) mit der ringförmigen Schiebepapierführungsnut (52) in Eingriff stehen; eine Schiebepapierschienenwechselbaugruppe an einer oberen Eingriffsstelle der Schiebepapierschutzführungsnut (59) und der ringförmigen Schiebepapierführungsnut (52) angeordnet ist und die Schiebepapierschienenwechselbaugruppe eine Schiebepapierschienenwechselgabel (590) und eine Schiebepapierschienenwechselantriebsquelle umfasst, die dazu konfiguriert ist, die Schiebepapierschienenwechselgabel (590) drehend anzutreiben.

## Revendications

1. Un appareil de poussée de matériau pour machine de mise en boîte à blisters, comprenant une chaîne (1), une roue de chaîne, un rail de guidage annulaire de plaque de poussée (4), et une pluralité d'unités de poussée de matériau (2) ; l'unité de poussée de matériau (2) comprend une base de poussée de matériau (20), un ensemble à plaque de poussée (21), et un ensemble de poussée de papier (22) ; la base de poussée de matériau (20) est raccordée à la chaîne (1), et la chaîne (1) est enroulée sur la roue de chaîne ;
**caractérisé en ce qu'**un rail de guidage annulaire (3) est agencé sur chacun des deux côtés du rail de guidage annulaire de plaque de poussée (4) ; une base coulissante mobile (23) est agencée sur chacune des deux extrémités de la base de poussée de matériau (20), et la base coulissante mobile (23) est agencée sur le rail de guidage annulaire (3) avec un ajustement glissant, et dans lequel
le rail de guidage annulaire (3) est en forme de gorge, la base coulissante mobile (23) est un roulement et la base coulissante mobile (23) roule dans la gorge, ou
le rail de guidage annulaire (3) est en forme de barre ; la base coulissante mobile (23) comprend un roulement supérieur (230) et un roulement inférieur (231), et le roulement inférieur (231) et le roulement supérieur (230) sont engagés avec le côté interne et le côté externe du rail de guidage annulaire (3), respectivement ; et la base coulissante mobile (23) à une extrémité de la base de poussée de matériau comprend en outre un roulement gauche et un roulement droit (232), et le roulement gauche et le roulement droit (232) sont engagés avec le côté gauche et le côté droit du rail de guidage annulaire (3), respectivement.

2. Un appareil de poussée de matériau pour machine de mise en boîte à blisters selon la revendication 1, dans lequel lorsque le rail de guidage annulaire (3) est en forme de barre, deux rails de guidage annulaires (3) sont agencés côte à côte à gauche et à droite, et les surfaces des sections de transition de virage (30) des deux rails de guidage annulaires (3) sont de tailles différentes ; il y a deux roulements supérieurs (230), et les deux roulements supérieurs (230) sont agencés en va-et-vient ; les deux roulements supérieurs (230), sur les côtés gauche et droit, agissent de façon correspondante sur les deux rails de guidage annulaires (3), respectivement.

3. Un appareil de poussée de matériau pour machine de mise en boîte à blisters selon la revendication 1, **caractérisé en ce que** la base de poussée de matériau (20) est raccordée à la chaîne (1) via un élément adaptateur (11) ; une extrémité de l'élément adaptateur (11) est articulée à l'arbre pivot (10) de la chaîne (1), et l'autre extrémité de l'élément adaptateur (11) est articulée à la base de poussée de matériau (20).

4. Un appareil de poussée de matériau pour machine de mise en boîte à blisters selon la revendication 1, **caractérisé en ce qu'**un bâti de gorge de guidage (5) est agencé sur la périphérie du rail de guidage annulaire de plaque de poussée (4), et une gorge de guidage de poussée de papier annulaire (52) et une gorge de guidage de levée annulaire (53) sont agencées sur le bâti de gorge de guidage (5) ; le bâti de gorge de guidage (5) est formé par division d'un bâti de gorge de guidage supérieur (50) et d'un bâti de gorge de guidage inférieur (51), et le d'un bâti de gorge de guidage supérieur (50) est levé et monté de façon ajustée sur le bâti de gorge de guidage inférieur (51) ; un segment supérieur de gorge de guidage de poussée de papier annulaire (521) et un segment supérieur de gorge de guidage de levée annulaire (531) sont agencés sur le bâti de gorge de guidage supérieur (50), et un segment inférieur de gorge de guidage de poussée de papier annulaire (522) et un segment inférieur de gorge de guidage de levée annulaire (532) sont agencés sur le bâti de gorge de guidage inférieur (51) ; le segment supérieur de gorge de guidage de poussée de papier annulaire (521) et le segment inférieur de gorge de guidage de poussée de papier annulaire (522) sont engagés par prolongement, et le segment supérieur de gorge de guidage de levée annulaire (531) et le segment inférieur de gorge de guidage de levée annulaire (532) sont engagés par prolongement ; un rail de guidage de levée (24) est monté sur la base de poussée de matériau (20), et un bloc coulissant de positionnement (25) est agencé de façon coulissante sur le rail de guidage de levée (24) ; un roulement de levée (26) et une gorge de guidage de positionnement (27) sont montés sur le bloc coulissant de positionnement (25), et le roulement de levée (26) est agencé dans la gorge de guidage de levée annulaire (53) ; l'ensemble de poussée de papier (22) comprend une tige de guidage de poussée de papier (221), une plaque de poussée de papier (220) et un roulement de poussée de papier (222), dans lequel la plaque de poussée de papier (220) et le roulement de poussée de papier (222) sont raccordés sur la tige de guidage de poussée de papier (221) ; la tige de guidage de poussée de papier (221) est agencée dans la gorge de guidage de positionnement (27), et le roulement de poussée de papier (222) est agencé dans la gorge de guidage de poussée de papier annulaire (52).

5. Un appareil de poussée de matériau pour machine de mise en boîte à blisters selon la revendication 4, **caractérisé en ce qu'**une extrémité de la partie d'extrémité du segment supérieur de gorge de guidage de poussée de papier annulaire (521) est munie d'une partie de prolongement de gorge de guidage vertical (54), une partie d'extrémité du segment inférieur de gorge de guidage de poussée de papier annulaire (522) est munie d'une gorge d'ajustement d'engagement vertical (55), et la partie de prolongement de gorge de guidage vertical (54) est levée et agencée dans la gorge d'ajustement d'engagement vertical (55).

6. Un appareil de poussée de matériau pour machine de mise en boîte à blisters selon la revendication 4 ou 5, **caractérisé en ce que**, une partie d'extrémité du segment supérieur de gorge de guidage de levée annulaire (531) est munie d'une paroi latérale de gorge de guidage supérieure vertical (533), une partie d'extrémité du segment inférieur de gorge de guidage de levée annulaire (532) est munie d'une paroi latérale de gorge de guidage inférieure verticale (534), et la paroi latérale de gorge de guidage inférieure verticale (534) est, de gauche à droite, entièrement engagée à la paroi latérale de gorge de guidage supérieure verticale (533).

7. Un appareil de poussée de matériau pour machine de mise en boîte à blisters selon la revendication 4, **caractérisé en ce qu'**une base de bloc coulissant de levée (511) est montée sur le bâti de gorge de guidage inférieur (51), et un rail de guidage linéaire (501) est monté sur le bâti de gorge de guidage supérieur (50) ; la base de bloc coulissant de levée (511) est agencée de façon coulissante sur le rail de guidage linéaire (501) ; une vis d'ajustement (58) est montée sur le bâti de gorge de guidage inférieur (51), et la vis d'ajustement (58) est filetée avec le bâti de gorge de guidage supérieur (50).

8. Un appareil de poussée de matériau pour machine de mise en boîte à blisters selon la revendication 1, **caractérisé en ce que** l'ensemble de plaque de poussée (21) comprend une tête de plaque de poussée (210), un roulement de plaque de poussée (212) et un bloc coulissant de plaque de poussée (211) ; le roulement de plaque de poussée (212) est situé dans le rail de guidage annulaire de plaque de poussée (4) ; un rail de guidage de positionnement (28) est agencé sur la base de poussée de matériau (20), et le bloc coulissant de plaque de poussée (211) est agencé de façon coulissante sur le rail de guidage de positionnement (28).

9. Un appareil de poussée de matériau pour machine de mise en boîte à blisters selon la revendication 1, **caractérisé en ce qu'**une gorge de guidage de protection de plaque de poussée (40) est agencée sur un côté du rail de guidage annulaire de plaque de poussée (4), et les deux extrémités de la gorge de guidage de protection de plaque de poussée (40) sont engagées sur le rail de guidage annulaire de plaque de poussée (4) ; un ensemble de changement de rail de plaque de poussée est agencé à l'engagement supérieur de la gorge de guidage de protection de plaque de poussée (40) et du rail de guidage annulaire de plaque de poussée (4), et l'ensemble de changement de rail de plaque de poussée comprend une fourche de changement de rail de plaque de poussée (41) et une source d'alimentation électrique de changement de rail de plaque de poussée configurée pour entraîner la rotation de la fourche de changement de rail de plaque de poussée (41).

10. Un appareil de poussée de matériau pour machine de mise en boîte à blisters selon la revendication 4, **caractérisé en ce qu'**une gorge de guidage de protection de poussée de papier (59) est agencée sur un côté de la gorge de guidage de poussée de papier annulaire (52), et les deux extrémités de la gorge de guidage de protection de poussée de papier (59) sont engagées sur la gorge de guidage de poussée de papier annulaire (52) ; un ensemble de changement de rail de guidage de poussée de papier est agencé à l'engagement supérieur de la gorge de guidage de protection de poussée de papier (59) et de la gorge de guidage de poussée de papier annulaire (52), et l'ensemble de changement de rail de guidage de poussée de papier comprend une fourche de changement de rail de poussée de papier (590) et une source d'alimentation électrique de changement de rail de poussée de papier configurée pour entraîner la rotation de la fourche de changement de rail de poussée de papier (590).
